# EUROPEAN PATENT APPLICATION

(11) **EP 4 510 521 A1**
(43) Date of publication of application: **19.02.2025**
(21) Application number: 23795153.8
(22) Date of filing: 19.04.2023
(51) Int. Cl.: H04L 43/0864

(54) **MESSAGE PROCESSING METHOD AND APPARATUS**

(30) Priority: 26.04.2022 CN 202210447215
(71) Applicant: Huawei Technologies Co., Ltd., Shenzhen, Guangdong 518129 (CN)
(72) Inventor: ZHOU, Yongbo, Shenzhen, Guangdong 518129 (CN); SHI, Yongjie, Shenzhen, Guangdong 518129 (CN); LIU, Yongzhi, Shenzhen, Guangdong 518129 (CN); XU, Li, Shenzhen, Guangdong 518129 (CN)
(74) Representative: Gill Jennings & Every LLP
(86) International application number: PCT/CN2023/089285
(87) International publication number: WO 2023/207720

(57) **Abstract**

This application provides a packet processing method and an apparatus. The method includes: when data at a first location in a packet arrives at a channel forwarding layer, determining a first multiframe used to bear the data at the first location; and determining a real timestamp of the first multiframe based on a timestamp of a second multiframe in a channel in which the first multiframe is located. The second multiframe is an X^{th} multiframe previous to the first multiframe in the channel, X≥0, and the timestamp of the second multiframe is a timestamp at which a second location of the second multiframe arrives at a physical layer. According to this application, stamping precision can be improved while packet stamping is implemented in the Ethernet leased line technology.

## Description

This application claims priority to Chinese Patent Application No. 202210447215.2, filed with the China National Intellectual Property Administration on April 26, 2022, and entitled "PACKET PROCESSING METHOD AND APPARATUS", which is incorporated herein by reference in its entirety.

### TECHNICAL FIELD

Embodiments of this application relate to the communication field, and in particular, to a packet processing method and an apparatus.

### BACKGROUND

With development of the communication technologies, the Ethernet leased line technology for bearing fine-granularity services is increasingly widely used. The Ethernet leased line technology provides fine-granularity channels using slotted Ethernet ports. For a packet to be transmitted through slotted Ethernet ports, the packet needs to be divided into a plurality of segments to be mapped to a plurality of fine-granularity channels.

In a communication system, to implement, for example, time synchronization between nodes and determine a round-trip delay of a packet between nodes, the packet needs to be stamped during transmission, that is, a timestamp of the packet needs to be determined. In a related technology, when identifying that a target field segment of the packet arrives at a physical layer (physical layer, PHY), the node determines a current time as the timestamp of the packet.

However, in an Ethernet leased line communication system, a packet has already been encoded, segmented, and mapped to fine-granularity slots before being transmitted to the physical layer. The target field segment of the packet cannot be identified at the physical layer using the related-technology stamping manner, and therefore the timestamp cannot be determined. Therefore, a packet processing method is urgently needed to implement packet stamping in the Ethernet leased line technology.

### SUMMARY

This application provides a packet processing method and an apparatus, to improve stamping precision while implementing packet stamping in the Ethernet leased line technology.

According to a first aspect, this application provides a packet processing method. The method includes: when data at a first location in a packet arrives at a channel forwarding layer, determining a first multiframe used to bear the data at the first location; and determining a real timestamp of the first multiframe based on a timestamp of a second multiframe in a channel in which the first multiframe is located. The second multiframe is an X^{th} multiframe previous to the first multiframe in the channel, X≥0, and the timestamp of the second multiframe is a timestamp at which a second location of the second multiframe arrives at a physical layer.

Herein, X is an integer greater than or equal to 0, the first location may be referred to as a stamping reference location of the packet, the second location may be referred to as a stamping reference location of the second multiframe of the packet, and the real timestamp of the first multiframe is a real timestamp of the packet.

A coarse-granularity channel layer sends a multiframe corresponding to the channel to the physical layer based on a multiplexing period of the multiframe. The physical layer uses a preamble code block as a unit of the multiframe. Each time a multiframe in the channel is received, a time at which a second location of the multiframe arrives at the physical layer is determined as a timestamp of the multiframe, and the timestamp of the multiframe is sent to the channel forwarding layer.

In the method, packet stamping in the Ethernet leased line technology is implemented. The second multiframe is the X^{th} multiframe previous to the first multiframe in the channel, and the timestamp of the second multiframe is the timestamp at which the second location of the second multiframe arrives at the physical layer, that is, the timestamp of the second multiframe is determined at the physical layer. As jitter of data transmission at the physical layer is low, and transmission stability is high, determining the timestamp of the second multiframe at the physical layer can improve accuracy of the timestamp of the second multiframe, thereby ensuring accuracy of the real timestamp of the first multiframe. When the real timestamp of the first multiframe is used for time synchronization between nodes and determining a round-trip delay of the packet between the nodes, accurate time synchronization can be implemented and an accurate round-trip delay can be determined.

In a possible implementation, the first location includes at least one of the following: a next bit of a start-of-frame delimiter (start-of-frame Delimiter, SFD) of the packet, a 1^{st} bit of the SFD of the packet, or a 1^{st} bit of a preamble code block of the packet.

In a possible implementation, the multiframe includes a plurality of basic frames arranged based on slots, and the second location includes at least one of the following: a next bit of an SFD of a 1^{st} basic frame of the multiframe, a 1^{st} bit of the SFD of the 1^{st} basic frame of the multiframe, or a 1^{st} bit of a preamble code block of the 1^{st} basic frame of the multiframe.

In a possible implementation, X>0, and the determining a real timestamp of the first multiframe based on a timestamp of a second multiframe in a channel in which the first multiframe is located includes: determining the real timestamp of the first multiframe based on the timestamp of the second multiframe and an interval between the second multiframe and the first multiframe.

Optionally, a sum of the timestamp of the second multiframe and the interval may be determined as the real timestamp of the first multiframe. The sum of the timestamp of the second multiframe and the interval may be considered as a time at which the first multiframe arrives at the physical layer, that is, the time at which the first multiframe arrives at the physical layer is determined as the real timestamp of the first multiframe.

In a possible implementation, the determining a real timestamp of the first multiframe based on a timestamp of a second multiframe in a channel in which the first multiframe is located includes: determining the timestamp of the second multiframe as the real timestamp of the first multiframe.

In a possible implementation, the method further includes: determining a time at which the second location of the multiframe in the channel arrives at the physical layer as the timestamp of the multiframe; and storing the timestamp of the multiframe in a storage space; and the determining a real timestamp of the first multiframe based on a timestamp of a second multiframe in a channel in which the first multiframe is located includes: obtaining the timestamp of the second multiframe from the storage space; and determining the real timestamp of the first multiframe based on the obtained timestamp of the second multiframe.

The storage space may include a buffer (buffer) with a depth of M. The channel forwarding layer leftward shifts the buffer each time after encapsulating a new multiframe, and stores the timestamp in a rightmost buffer after receiving the timestamp of the multiframe sent by the physical layer.

According to a second aspect, this application provides a packet processing apparatus. The apparatus includes: a first determining module, configured to: when data at a first location in a packet arrives at a channel forwarding layer, determine a first multiframe used to bear the data at the first location; and a second determining module, configured to: determine a real timestamp of the first multiframe based on a timestamp of a second multiframe in a channel in which the first multiframe is located. The second multiframe is an X^{th} multiframe previous to the first multiframe in the channel, X≥0, and the timestamp of the second multiframe is a timestamp at which a second location of the second multiframe arrives at a physical layer.

In a possible implementation, the first location includes at least one of the following: a next bit of a start-of-frame delimiter SFD of the packet, a 1^{st} bit of the SFD of the packet, or a 1^{st} bit of a preamble code block of the packet.

In a possible implementation, the multiframe includes a plurality of basic frames arranged based on slots, and the second location includes at least one of the following: a next bit of a start-of-frame delimiter SFD of a 1^{st} basic frame of the multiframe, a 1^{st} bit of the SFD of the 1^{st} basic frame of the multiframe, or a 1^{st} bit of a preamble code block of the 1^{st} basic frame of the multiframe.

In a possible implementation, X>0, and the second determining module is specifically configured to determine the real timestamp of the first multiframe based on the timestamp of the second multiframe and an interval between the second multiframe and the first multiframe.

In a possible implementation, the second determining module is specifically configured to determine the timestamp of the second multiframe as the real timestamp of the first multiframe.

In a possible implementation, the apparatus further includes: a third determining module, configured to determine a time at which the second location of the multiframe in the channel arrives at the physical layer as the timestamp of the multiframe; and a storage module, configured to store the timestamp of the multiframe in a storage space. The second determining module is specifically configured to: obtain the timestamp of the second multiframe from the storage space; and determine the real timestamp of the first multiframe based on the obtained timestamp of the second multiframe.

According to a third aspect, this application provides a packet processing apparatus. The apparatus includes one or more processors and a memory. The memory is configured to store one or more computer programs or instructions; and when the one or more computer programs or instructions are executed by the one or more processors, the one or more processors are enabled to implement the method according to any one of the first aspect or the possible implementations of the first aspect.

According to a fourth aspect, this application provides a packet processing apparatus, including a processor, configured to perform the method according to any implementation of the first aspect.

According to a fifth aspect, this application provides a computer-readable storage medium, including a computer program or instructions. When the computer program or the instructions is/are executed on a computer, the computer is enabled to perform the method according to any one of the first aspect or the possible implementations of the first aspect.

### BRIEF DESCRIPTION OF DRAWINGS

FIG. 1 is an application diagram of the Ethernet leased line technology according to an embodiment of this application;
FIG. 2 is a diagram of a multiframe structure in an SPN technology according to an embodiment of this application;
FIG. 3 is a diagram of a structure of a multiframe in an ASN technology according to an embodiment of this application;
FIG. 4 is a diagram of a format of an fgBU basic frame according to an embodiment of this application;
FIG. 5 is a diagram of a structure of an fgBU OH field according to an embodiment of this application;
FIG. 6 is a diagram of a network architecture of a node according to an embodiment of this application;
FIG. 7 is a schematic flowchart of a packet processing method according to an embodiment of this application;
FIG. 8 is a schematic flowchart of another packet processing method according to an embodiment of this application;
FIG. 9 is a diagram of a process of determining a real timestamp of a first multiframe according to an embodiment of this application;
FIG. 10 is a diagram of another process of determining a real timestamp of a first multiframe according to an embodiment of this application;
FIG. 11 is a diagram of still another process of determining a real timestamp of a first multiframe according to an embodiment of this application;
FIG. 12 is a block diagram of a packet processing apparatus according to an embodiment of this application;
FIG. 13 is a block diagram of another packet processing apparatus according to an embodiment of this application;
FIG. 14 is a diagram of a structure of an electronic device according to an embodiment of this application; and
FIG. 15 is a diagram of a structure of a packet processing apparatus according to an embodiment of this application.

### DESCRIPTION OF EMBODIMENTS

The following clearly and completely describes the technical solutions in embodiments of this application with reference to the accompanying drawings in embodiments of this application. It is clear that the described embodiments are a part rather than all of embodiments of this application. All other embodiments obtained by a person of ordinary skill in the art based on embodiments of this application without creative efforts shall fall within the protection scope of this application.

The term "and/or" in this specification describes only an association relationship for describing associated objects and represents that three relationships may exist. For example, A and/or B may represent the following three cases: Only A exists, both A and B exist, and only B exists.

In the specification and claims in embodiments of this application, the terms "first", "second", and the like are intended to distinguish between different objects, but are not used to describe a particular order of the objects. For example, a first range, a second range, and the like are used to distinguish different ranges, but are not used to describe a specific order of the ranges.

In embodiments of this application, words such as "in an example", "example", or "for example" are used to represent giving an example, an illustration, or a description. Any embodiment or design scheme described as "in an example", "example", or "for example" in embodiments of this application should not be explained as being more preferred or having more advantages than another embodiment or design scheme. Exactly, use of the word "in an example", "example", "for example", or the like is intended to present a related concept in a specific manner.

In the descriptions of embodiments of this application, unless otherwise specified, "at least one" means one or more, and "a plurality of" means two or more. For example, a plurality of processing units indicate two or more processing units, and a plurality of systems indicate two or more systems.

The flexible Ethernet (flexible Ethernet, FlexE) technology, which is a lightweight enhanced Ethernet technology, supports port binding and channelization technologies and can construct an end-to-end physical link. Using port binding can achieve a high bandwidth. For example, eight 100 gigabit Ethernet (gigabit Ethernet, GE) ports may be bonded to achieve a bandwidth of 800 gigabit per second (gigabits per second, Gbps). Using the channelization technology can decouple rates of a physical layer and a media access control layer (media access control, MAC) layer, so that flexible bandwidth allocation and access of diversified service rates can be implemented. In the FlexE technology, transmission of a packet is based on a physical link group consisting of at least one Ethernet physical port, and a bandwidth of the Ethernet physical port may be 50 Gbps, 100 Gbps, 200 Gbps, or 400 Gbps.

Each Ethernet physical port may be divided into at least one FlexE instance each with a fixed period frame structure (also referred to as a multiframe structure). In one FlexE instance, multiframes of a same structure are cyclically transmitted by periods, where the multiframe may carry a service or carry no service. The FlexE instance may be divided into a plurality of coarse-granularity slots based on time division multiplexing (time division multiplexing, TDM), and the plurality of coarse-granularity slots are encapsulated based on the multiframe structure. Each slot includes 1023 *8=8184 66-bit (binary digit, Bit) code blocks. One service is mapped to at least one corresponding coarse-granularity slot for transmission, and the service may be, for example, an Ethernet service flow or a FlexE client (client) signal. For example, one 200 Gbps port may be divided into two 100 Gbps FlexE instances, a multiframe of the 100 Gbps FlexE instance includes 20 coarse-granularity slots at a granularity of 5 Gbps, and each 66B data block is equivalent to a bandwidth resource of 0.61 megabits per second (megabits per second, Mbps). In this slot allocation manner, the FlexE instance can support an N*5 Gbps Ethernet service flow or FlexE client signal.

On the basis of FlexE technology, a metro transport network (metro transport network, MTN) introduces channel forwarding, operation, administration, and maintenance (operation administration and maintenance, OAM), and other functions. A granularity for performing slot division in the MTN is the same as that in the FlexE, and both of which are 5 Gbps.

Slots in the FlexE and the MTN are both coarse-granularity slots, and a minimum granularity of a borne service is 5 Gbps. Consequently, the FlexE and the MTN have low efficiency in bearing a non-5 Gbps granularity service (for example, a fine-granularity service with a bandwidth requirement less than 5 Gbps). To meet the bandwidth requirement of the fine-granularity service, the Ethernet leased line technology for bearing the fine-granularity service is developing rapidly. In the Ethernet leased line technology, a fine-granularity channel is provided, for example, a 10 Mbps channel, through a slotted Ethernet port. The fine-granularity channel is borne in a coarse-granularity channel (also referred to as a coarse-granularity bearer pipe) or a coarse-granularity physical Ethernet port.

A bandwidth of the coarse-granularity channel or the coarse-granularity Ethernet port is equivalent to a bandwidth of a coarse-granularity slot in the FlexE or MTN technology. The coarse-granularity channel or the coarse-granularity physical Ethernet port has a fixed multiframe structure. In the coarse-granularity channel or the coarse-granularity physical Ethernet port, multiframes of a same structure are transmitted cyclically by periods, and the multiframe may carry a service or carry no service. The coarse-granularity channel or the coarse-granularity physical Ethernet port may be divided into a plurality of fine-granularity slots based on TDM, and the plurality of fine-granularity slots are encapsulated based on the multiframe structure. The multiframe may include a plurality of basic frames, and the basic frame may be a fine-granularity basic unit (fine-granularity basic unit, fgBU) basic frame.

For a service to be transmitted through slotted Ethernet ports, the service is divided into a plurality of segments to be mapped to corresponding fine-granularity channels for transmission. The fine-granularity channels may include a fine-granularity slot channel and a fine-granularity overhead (overhead, OH) channel. The fine-granularity slot channel is a channel including at least one fine-granularity slot, and the fine-granularity OH channel is a channel including an OH field in a multiframe. In the Ethernet leased line technology, a coarse-granularity bandwidth is further divided to implement flexible bandwidth allocation and refined bandwidth utilization, thereby ensuring efficiency for bearing the fine-granularity service.

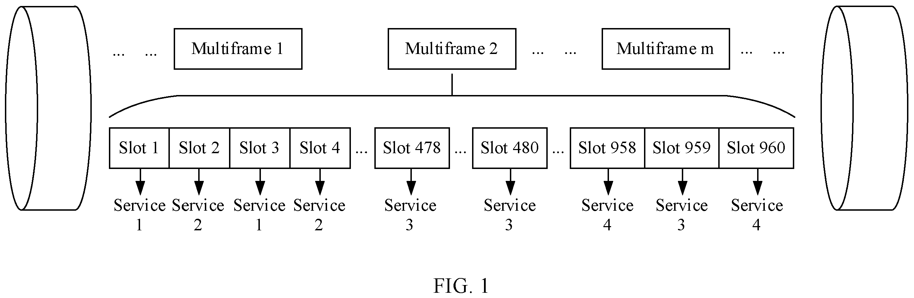

FIG. 1 is an application diagram of an Ethernet leased line technology according to an embodiment of this application. FIG. 1 shows a 10 Gbps coarse-granularity channel and a multiframe 1 to a multiframe m that are cyclically transmitted on the channel. The 10 Gbps coarse-granularity channel is divided into 960 10 Mbps fine-granularity slots (a slot 1 to a slot 960). One multiframe includes 960 slots, that is, in one period, each slot is multiplexed once, and a minimum granularity of a borne service is 10 Mbps. As shown in FIG. 1, in a multiframe 2, a slot 1, a slot 3, and the like bear a service 1; a slot 2, a slot 4, and the like bear a service 2; a slot 478, a slot 480, a slot 959, and the like bear a service 3; and a slot 958, a slot 960, and the like bear a service 4. It should be noted that FIG. 1 does not show all slots and services borne in the slots.

The Ethernet leased line technology may include a slicing packet network (slicing packet network, SPN) technology and an automotive slicing network (automotive slicing network, ASN) technology. The SPN technology can meet requirements of a deterministic low delay and hard isolation in a high-quality Ethernet leased line service scenario. In the SPN technology, a fine-granularity channel is borne on a 10 Gbps physical Ethernet port or a 5 Gbps coarse-granularity channel. A minimum granularity of a borne service is 10 Mbps, and a maximum bandwidth is 4.8 Gbps. The ASN technology can meet requirements of a deterministic low delay, low jitter, and hard isolation in an automotive deterministic network scenario. In the ASN technology, the fine-granularity channel is borne on a 1GE, 2.5GE, 5GE, 10GE, or 25GE port. The minimum granularity of the borne service is 10 Mbps, and the maximum bandwidth is 0.96*a coarse-granularity bandwidth.

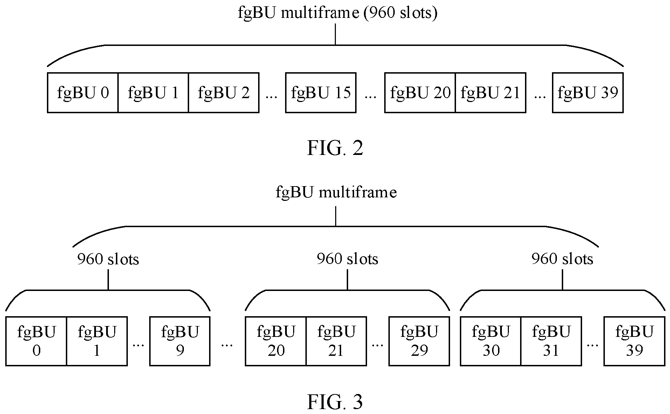

The following uses an fgBU multiframe as an example to describe multiframe structures in the SPN technology and the ASN technology. FIG. 2 is a diagram of a multiframe structure in an SPN technology according to an embodiment of this application. FIG. 2 is described by using a 10 Gbps coarse-granularity channel and an fgBU multiframe cyclically transmitted on the channel as an example. As shown in FIG. 2, the 10 Gbps coarse-granularity channel is divided into 960 slots, that is, each 0.5 Gbps channel bears 48 slots. The fgBU multiframe includes 40 consecutive fgBU basic frames (an fgBU 0 to an fgBU 39) having a same structure. The fgBU 0 to the fgBU 39 are cyclically transmitted by periods, and each 0.5 Gbps channel bears two fgBU basic frames. Each fgBU basic frame includes 24 slots. Therefore, each slot in an fgBU multiframe is multiplexed for one time.

FIG. 3 is a diagram of a multiframe structure in an ASN technology according to an embodiment of this application. FIG. 3 is described by using a 10 Gbps coarse-granularity channel and an fgBU multiframe cyclically transmitted on the channel as an example. As shown in FIG. 3, the 10 Gbps coarse-granularity channel is divided into 960 slots, that is, each 0.5 Gbps channel bears 48 slots. The fgBU multiframe includes 40 consecutive fgBU basic frames (an fgBU 0 to an fgBU 39) having a same structure. The fgBU 0 to the fgBU 39 are cyclically transmitted by periods, and each 0.5 Gbps channel bears two fgBU basic frames. Each fgBU basic frame includes 96 slots. Therefore, each slot in an fgBU multiframe is multiplexed four times.

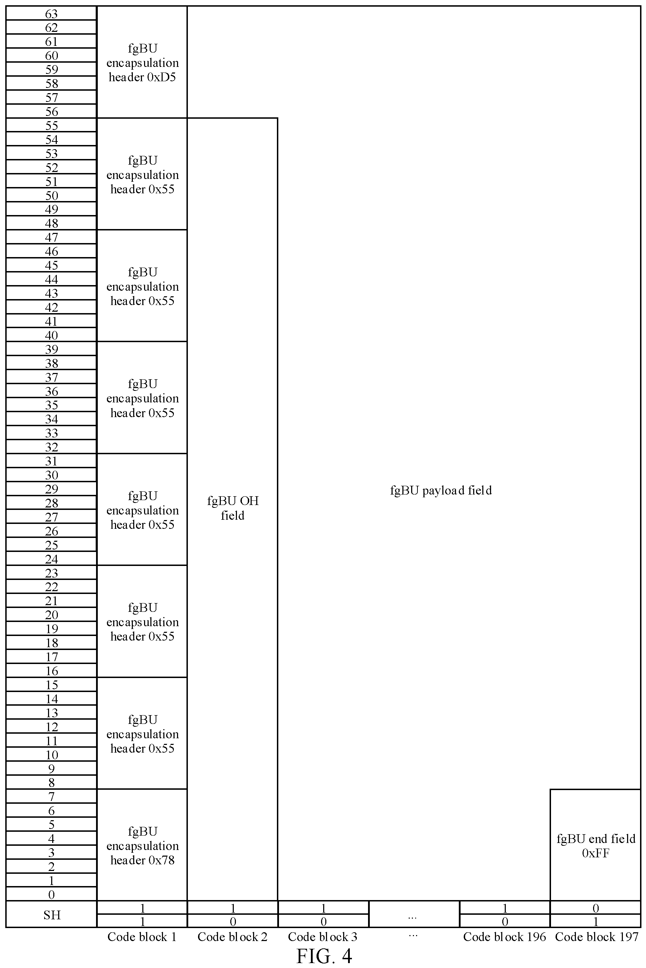

FIG. 4 is a diagram of a format of an fgBU basic frame according to an embodiment of this application. The fgBU basic frame includes a plurality of fine-granularity slots, and a structure of the fgBU basic frame includes an fgBU encapsulation header, an fgBU overhead (overhead, OH) field, an fgBU payload (payload) field, and an fgBU end field. The fgBU basic frame includes 197 64B/66B code blocks (a code block 1 to a code block 197), and a length of the fgBU basic frame is 1567 bytes (bytes). The fgBU encapsulation header is located in a preamble code block (that is, the code block 1 in FIG. 4), and occupies 8 bytes in total. The fgBU OH field is located in the code block 2, and occupies 7 bytes in total. The fgBU payload field is located in the code block 2 to the code block 197, and occupies 1560 bytes in total. The fgBU end field is located in the end code block 197, and occupies 1 byte in total. One or more idle (idle) code blocks may be added after the end code block of the fgBU basic frame, or no idle code block may be added.

The fgBU encapsulation header is used for delimitation of the fgBU basic frame to mark a start of the fgBU basic frame. The fgBU encapsulation header is compatible with a preamble of an Ethernet standard, a coarse-granularity channel, and Ethernet rate adaptation. The fgBU encapsulation header may include a preamble part and an SFD, the preamble part occupies first 7 bytes of the code block 1, and the SFD occupies an 8^{th} byte of the code block 1. The fgBU payload field is used to encapsulate a fine-granularity slot, and the fine-granularity slot is used to bear a service. In FIG. 4, an example in which the fgBU payload field bears a service in a 64B/66B mode is used for description. The fgBU payload field may alternatively bear a service in at least one of the following modes: 64B/65B, 256B/257B, constant bit rate (constant bit rate, CBR), and the like. The fgBU end field may include an end-of-frame delimiter (end-of-frame-delimiter, EFD), for marking an end of the fgBU basic frame, and the fgBU end field may be compatible with a T7/T3 code block in the Ethernet standard.

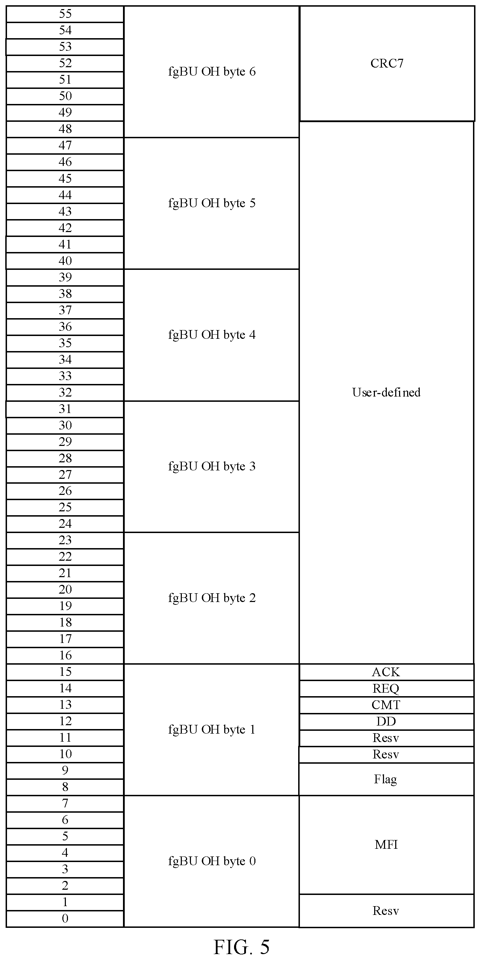

The fgBU OH field may also be used to bear the service. FIG. 5 is a diagram of a structure of the fgBU OH field according to an embodiment of this application. The fgBU OH field occupies first 7 bytes (an fgBU OH byte 0 to an fgBU OH byte 6 in FIG. 5) of the code block 2, that is, occupies a bit 0 to a bit 55 of the code block 2. As shown in FIG. 5, the fgBU OH field includes three reserved (reserved, Resv) bits, a multiframe indication (multiframe indication, MFI) bit, a flag (flag) bit, a downstream done (downstream done, DD) bit, and a commit (CMT) bit, a request (request, REQ) bit, an acknowledgement (acknowledgement, ACK) bit, a user-defined bit, and a cyclic redundancy check (cyclic redundancy check, CRC) 7 bit.

One of the 3 resv bits occupies a bit 0 and a bit 1, the remaining 2 resv bits occupy a bit 10 and a bit 11. The MFI bit occupies a bit 2 to a bit 7. The flag bit occupies a bit 8 and a bit 9. The DD bit occupies a bit 12. The CMT bit occupies a bit 13, the REQ bit occupies a bit 14. The ACK bit occupies a bit 15. The user-defined bit occupies a bit 16 to a bit 48. The CRC7 bit occupies a bit 49 to a bit 55.

The 3 resv bits are reserved for future extension. The MFI bit is used to carry a sequence number of an fgBU basic frame in which the MFI bit is located in the fgBU multiframe, and the sequence number is used to identify the fgBU basic frame. Different fgBU basic frames in one fgBU multiframe have different sequence numbers. A value of an MFI bit of a 1^{st} fgBU basic frame in the fgBU multiframe is 0b000000, and a value of an MFI bit of a subsequent fgBU basic frame increases by 1 based on an arrangement sequence. For example, when the fgBU multiframe includes 20 fgBU basic frames, a valid range of a value of the MFI bit is 0b000000 to 0b010011 (0 to 19). When the fgBU multiframe includes four fgBU basic frames, the valid range of the value of the MFI bit is 0b000000 to 0b000011 (0 to 3). When the fgBU multiframe includes 40 fgBU basic frames, the valid range of the value of the MFI bit is 0b000000 to 0b100111 (0 to 39), and 0b00101000 to 0b111111 are reserved values.

The flag bit indicates a message type carried in the bit 10 to the bit 55. When a value of the flag bit is 0b00, it indicates that the bit 10 to the bit 55 carry a slot configuration message (calendar configuration). When the value of the flag bit is 0b11, it indicates that the bit 10 to the bit 55 carry a management channel (general communication channel, GCC) message. The values 0b10 and 0b01 are two reserved values of the flag bit.

The DD bit, the CMT bit, the REQ bit, or the ACK bit is used to carry information required for negotiation interaction between two nodes, and a specific meaning may be user-defined. For example, the DD bit may be used to notify an upstream node that bandwidth increase adjustment is completed, and the upstream node may start a bandwidth increase program, and send an adjustment request to the local node. The CMT bit may indicate that slot configuration adjustment of the local node takes effect. Both the REQ bit and the ACK bit carry slot configuration information, the slot configuration information carried in the REQ bit is used to send a slot adjustment request to a downstream node, and the slot configuration information carries a number of a fine-granularity slot to be adjusted and a corresponding client signal identity. The slot configuration information carried in the ACK bit is used to perform a slot adjustment response after the slot adjustment request of the upstream node is received, and the slot configuration information carries a number of a sub-slot to be adjusted and a corresponding sub-client signal identity. The user-defined bit is defined by a user and can be used to bear a service. The CRC7 bit is used to carry CRC7 code. The CRC7 code is used to check content carried in the bit 8 to the bit 48. A polynomial is x7+x5+x4+x2+x+1. An initial value is 0, a result is [x6:x0], and a most significant bit is transmitted first.

For nodes in communication, to implement, for example, time synchronization between the nodes and determine a round-trip delay of a packet between the nodes, the packet needs to be stamped in a packet transmission process, that is, a timestamp of the packet needs to be determined. In a related technology, when identifying that a target field segment of the packet arrives at a physical layer, the node determines a current time as the timestamp of the packet. For example, when time synchronization is performed via a time synchronization packet, the node processes and identifies a packet header of the time synchronization packet at the physical layer, and determines current time as a timestamp of the time synchronization packet when a target field segment is identified.

However, in an Ethernet leased line communication system, a packet has already been encoded, segmented, and mapped to fine-granularity channels before being transmitted to the physical layer. The packet cannot be processed and identified at the physical layer in a stamping manner of a related technology, and therefore the target field segment of the packet cannot be identified, and the timestamp cannot be determined. In other words, the related technology can be applied only to a common Ethernet port, and cannot be applied to a slotted Ethernet port in the Ethernet leased line technology. Therefore, currently, a packet processing method is urgently needed to implement packet stamping in the Ethernet leased line technology.

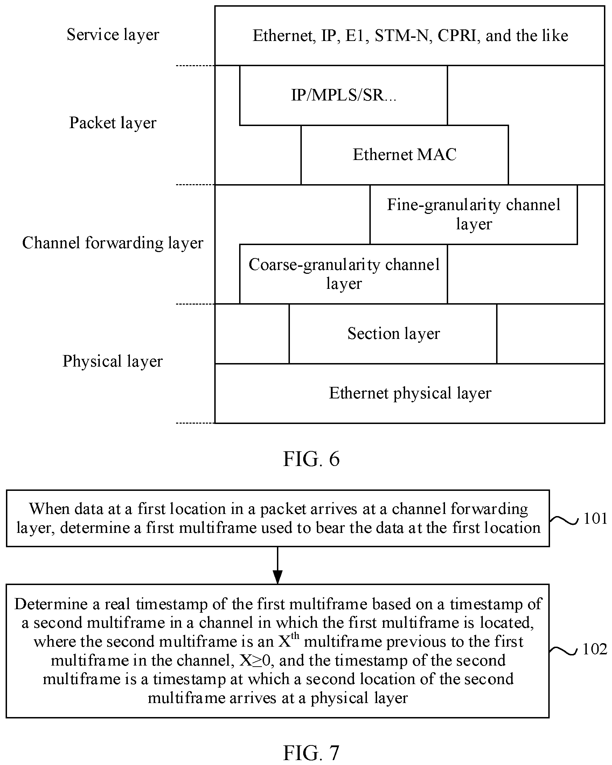

Embodiments of this application provide a packet processing method, to implement stamping on a packet in the Ethernet leased line technology. The method may be applied to a node, and the node includes a sending node configured to send a packet and a receiving node configured to receive a packet. FIG. 6 is a diagram of a network architecture of a node according to an embodiment of this application. The network architecture includes a service layer, a packet layer, a channel forwarding layer, and a physical layer. The service layer is used to bear services of types such as the Ethernet, the Internet protocol (Internet protocol, IP), E1, a synchronous transport module level n (synchronous transport module level N, STM-N), and a common public radio interface (common public radio interface, CPRI). The packet layer may perform grouping by using technologies such as the IP, multi-protocol label switching (multi-protocol label switching, MPLS), or segment routing (segment routing, SR), and the packet layer further includes an Ethernet MAC layer. The channel forwarding layer includes a fine-granularity channel layer and a coarse-granularity channel layer. The physical layer includes a section layer (section layer) and an Ethernet physical layer.

The service layer and the packet layer correspond to services. In this case, services are in the form of packets. The channel forwarding layer is configured to complete channel multiplexing, including the fine-granularity channel layer and the coarse-granularity channel layer. The fine-granularity channel layer is configured to encapsulate, in a basic frame format, a plurality of fine-granularity slots included in a coarse-granularity channel, where the plurality of basic frames form one multiframe, and the multiframe is a minimum multiplexing period of the fine-granularity channel layer. When receiving a packet, the fine-granularity channel layer encodes and segments the packet, and maps the packet segments to corresponding fine-granularity channels in the multiframe. The coarse-granularity channel layer is configured to: multiplex, to a coarse-granularity channel or a coarse-granularity Ethernet port, the basic frames obtained through encapsulation at the fine-granularity channel layer, and send the basic frames to the physical layer. An interface between the physical layer and the channel forwarding layer is a media independent interface (media independent interface, MII) or a 66B code block interface. The physical layer is configured to perform rate adaptation and physical layer encoding and decoding. The physical layer encoding and decoding may include, for example, forward error correction (forward error correction, FEC) encoding and decoding.

The following describes a process of transmitting a packet in a node by using an example in which the channel forwarding layer sends an fgBU basic frame to the physical layer. When time synchronization needs to be performed or a round-trip delay of a packet between nodes needs to be determined, an Internet protocol (Internet protocol, IP) layer of the service layer sends the packet to a lower layer. The packet layer sends the packet to a specified channel of the channel forwarding layer by carrying a channel label. The fine-granularity channel layer of the channel forwarding layer encapsulates, in an fgBU basic frame format, a plurality of fine-granularity slots included in a coarse-granularity channel, and the plurality of fgBU basic frames form one fgBU multiframe. After receiving the packet, the fine-granularity channel layer encodes the packet, segments the packet into a plurality of segments based on a fixed granularity, and maps the segments to corresponding fine-granularity channels. The fixed granularity may include a fine-granularity slot granularity and a fine-granularity OH granularity. When the fixed granularity is the fine-granularity slot granularity, the segments are mapped to one corresponding slot in the fgBU multiframe. When the fixed granularity is the fine-granularity OH granularity, the segments are mapped to at least one corresponding fgBU OH field in the fgBU multiframe. The coarse-granularity channel layer multiplexes, to one coarse-granularity channel in a TDM manner at a multiplexing granularity of a 64B code block, fgBU basic frames encapsulated in a plurality of fine-granularity channels, and then sends the 64B code block to the physical layer.

FIG. 7 is a schematic flowchart of a packet processing method according to an embodiment of this application. The method may be applied to a node, for example, applied to the network structure of the node shown in FIG. 6. In FIG. 7, a multiframe cyclically transmitted on a coarse-granularity channel is used as an example for description. For a processing method for a packet transmitted on another coarse-granularity channel, refer to the following process. Details are not described in embodiments of this application. As shown in FIG. 7, the method may include the following process.

101: When data at a first location in a packet arrives at a channel forwarding layer, determine a first multiframe used to bear the data at the first location.

The first location may be referred to as a stamping reference location of the packet.

102: Determine a real timestamp of the first multiframe based on a timestamp of a second multiframe in a channel in which the first multiframe is located, where the second multiframe is an X^{th} multiframe previous to the first multiframe in the channel, X≥0, and the timestamp of the second multiframe is a timestamp at which a second location of the second multiframe arrives at a physical layer.

Herein, X is an integer greater than or equal to 0. The second location may be referred to as a stamping reference location of the second multiframe, and the real timestamp of the first multiframe is a real timestamp of the packet.

In conclusion, according to the packet processing method provided in embodiments of this application, when the data at the first location in the packet arrives at the channel forwarding layer, the first multiframe used to bear the data at the first location is determined, and then the real timestamp of the first multiframe is determined based on the timestamp of the second multiframe in the channel in which the first multiframe is located. In this way, packet stamping is implemented in the Ethernet leased line technology. The second multiframe is the X^{th} multiframe previous to the first multiframe in the channel, and the timestamp of the second multiframe is the timestamp at which the second location of the second multiframe arrives at the physical layer, that is, the timestamp of the second multiframe is determined at the physical layer. Jitter of data transmission at the physical layer is low, and transmission stability is high. Therefore, determining the timestamp of the second multiframe at the physical layer may improve accuracy of the timestamp of the second multiframe, thereby ensuring accuracy of the real timestamp of the first multiframe. When the real timestamp of the first multiframe is used for time synchronization between nodes and is used to determine a round-trip delay of the packet between the nodes, accurate time synchronization may be implemented and an accurate round-trip delay may be determined.

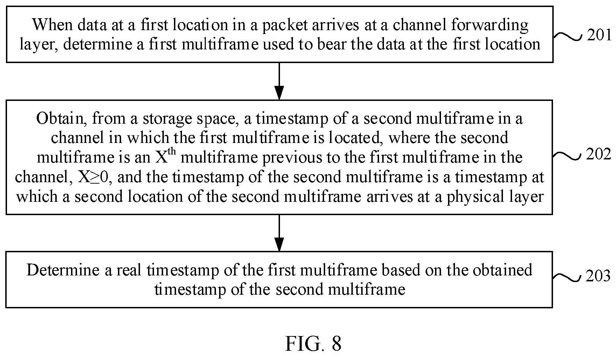

FIG. 8 is a schematic flowchart of another packet processing method according to an embodiment of this application. The method may be applied to a node, for example, applied to the network structure of the node shown in FIG. 6. In FIG. 8, a multiframe cyclically transmitted on a coarse-granularity channel is used as an example for description. For a processing method for a packet transmitted on another coarse-granularity channel, refer to the following process. Details are not described in embodiments of this application. As shown in FIG. 8, the method may include the following process.

201: When data at a first location in a packet arrives at a channel forwarding layer, determine a first multiframe used to bear the data at the first location.

Optionally, the first location may include at least one of the following: a next bit of an SFD of the packet, a 1^{st} bit of the SFD of the packet, or a 1^{st} bit of a preamble code block of the packet.

When the data at the first location in the packet arrives at the channel forwarding layer, the data is not encoded, segmented, or mapped to fine-granularity channels. When identifying the data at the first location in the packet, a fine-granularity channel layer may determine, based on slot configuration information, a fine-granularity channel subsequently used to bear the data at the first location, further, a multiframe corresponding to the fine-granularity channel is determined as the first multiframe. As described above, the data at the first location may be subsequently borne in a fine-granularity slot channel or a fine-granularity OH channel of the first multiframe.

In embodiments of this application, the packet may include a time synchronization packet, for example, may be a 1588 packet of a high precision time synchronization protocol (precision time protocol, PTP) defined based on a standard (IEEE 1588) for a precision clock synchronization protocol for networked measurement and control systems. The first multiframe may include a first fgBU multiframe, and the data at the first location may be subsequently borne in an fgBU payload field or an fgBU OH field of the first fgBU multiframe.

202: Obtain, from a storage space, a timestamp of a second multiframe in a channel in which the first multiframe is located, where the second multiframe is an X^{th} multiframe previous to the first multiframe in the channel, X≥0, and the timestamp of the second multiframe is a timestamp at which a second location of the second multiframe arrives at a physical layer.

It can be learned from the foregoing description that the multiframe includes a plurality of basic frames, and the second location may include at least one of the following: a next bit of an SFD of a 1^{st} basic frame of the multiframe, a 1^{st} bit of the SFD of the 1^{st} basic frame of the multiframe, or a 1^{st} bit of a preamble code block of the 1^{st} basic frame of the multiframe.

For the channel (that is, a coarse-granularity channel) in which the first multiframe is located, a node determines a time at which a second location of each multiframe in the channel arrives at the physical layer as a timestamp of the multiframe, and stores the timestamp of the multiframe in a storage space. The second multiframe is a multiframe previous to the first multiframe in the channel or is a second multiframe. When the data at the first location of the packet is identified, the second location of the second multiframe usually arrives at the physical layer, that is, the storage space already stores the timestamp of the multiframe, therefore, the node may obtain the timestamp of the second multiframe from the storage space.

For example, as shown in FIG. 6, the coarse-granularity channel layer sends a multiframe corresponding to the channel to the physical layer based on a multiplexing period of the multiframe. The physical layer uses a preamble code block as a unit of the multiframe. Each time a multiframe in the channel is received, a time at which a second location of the multiframe arrives at the physical layer is determined as a timestamp of the multiframe, and the timestamp of the multiframe is sent to the channel forwarding layer. The channel forwarding layer maintains one storage space, and the channel forwarding layer stores the timestamp of the received multiframe in the storage space.

Optionally, the channel forwarding layer may store M latest received timestamps, where M is a positive integer. For example, when X>0, M=X+1; or when X=0, M=2. The storage space may include a buffer with a depth of M. The channel forwarding layer shifts the buffer left each time after encapsulating a new multiframe, and stores the timestamp in a rightmost buffer after receiving the timestamp of the multiframe sent by the physical layer. For example, the storage space may include M buffers from a timestamp (timestamp, TS) (K) to a TS (K-M+1). After receiving the timestamp of the multiframe sent by the physical layer, the channel forwarding layer stores the timestamp in the TS (K).

203: Determine the real timestamp of the first multiframe based on the obtained timestamp of the second multiframe.

Refer to the foregoing process 202. A timestamp stored in TS (K-M+1) is the timestamp of the second multiframe. In the first implementation, the timestamp of the second multiframe may be directly determined as the real timestamp of the first multiframe.

In a second implementation, in a case in which X>0, the real timestamp of the first multiframe may be determined based on the timestamp of the second multiframe and an interval between the second multiframe and the first multiframe. Optionally, a sum of the timestamp of the second multiframe and the interval may be determined as the real timestamp of the first multiframe. For example, it is assumed that the first multiframe is a multiframe K in the channel, the second multiframe is a multiframe K-X in the channel, and the interval is X multiframe periods, a sum of the timestamp of the second multiframe and the X multiframe periods may be determined as the real timestamp of the first multiframe. The sum of the timestamp of the second multiframe and the interval may be considered as a time at which the first multiframe arrives at the physical layer, that is, the time at which the first multiframe arrives at the physical layer is determined as the real timestamp of the first multiframe.

In embodiments of this application, the node that performs the foregoing process may include a sending node configured to send a packet and a receiving node configured to receive a packet. For the sending node, the packet is transmitted from a service layer to the physical layer, and the real timestamp of the first multiframe may be considered as a sending timestamp of the packet. For the receiving node, the packet is transmitted from the physical layer to the service layer, and the real timestamp of the first multiframe may be considered as a receiving timestamp of the packet.

The sending node may transmit the real timestamp to a peer end using a single-step method or a two-step method. The single-step method means that the real timestamp is directly included in the packet for transmission. The two-step method means that the real timestamp is sent separately after the packet is sent. For example, assuming that the packet is a synchronization (synchronization, Sync) packet in a time synchronization process, the single-step method means that a real timestamp is included in the sync packet for transmission, and the two-step method means that the sync packet is sent first, and then a follow_up packet is generated, where the real timestamp of the sync packet is included in the follow_up packet for transmission.

For the foregoing case in which the sending node transmits the real timestamp of the packet, when the sending node needs to determine the time at which the second location of the first multiframe arrives at the physical layer as the real timestamp of the first multiframe, because a part that is of the first multiframe and that is used to bear the data at the first location in the packet is close to the second location, there may be a case in which the timestamp of the first multiframe is not received by the channel forwarding layer when the data at the first location in the packet arrives at the channel forwarding layer.

In this case, for the single-step method, the packet can be sent only after the real timestamp of the first multiframe is determined. Therefore, in an example, the real timestamp of the first multiframe may be determined in the foregoing second implementation. To be specific, the real timestamp of the first multiframe is determined based on the received timestamp of the second multiframe and the interval between the second multiframe and the first multiframe. For this process, refer to the foregoing descriptions. Details are not described herein in this embodiment of this application. In this way, when the timestamp of the first multiframe is not received, the real timestamp of the first multiframe may be obtained through inference based on the timestamp of the second multiframe, thereby implementing packet stamping without affecting packet transmission. In another example, sending of the packet may be delayed. After the timestamp of the first multiframe is received, the real timestamp of the first multiframe is determined in the foregoing first implementation, and then the packet is encoded, segmented, and mapped to fine-granularity channels. For the two-step method, because the packet can be transmitted before the real timestamp of the first multiframe is determined, the real timestamp may be transmitted after the timestamp of the first multiframe is received.

When the receiving node needs to determine the time at which the second location of the first multiframe arrives at the physical layer as the real timestamp of the first multiframe, because the receiving node first receives the first multiframe at the physical layer, and then the packet arrives at the channel forwarding layer, there is no case in which the timestamp of the first multiframe is not received at the channel forwarding layer when it is identified that the data at the first location in the packet arrives at the channel forwarding layer.

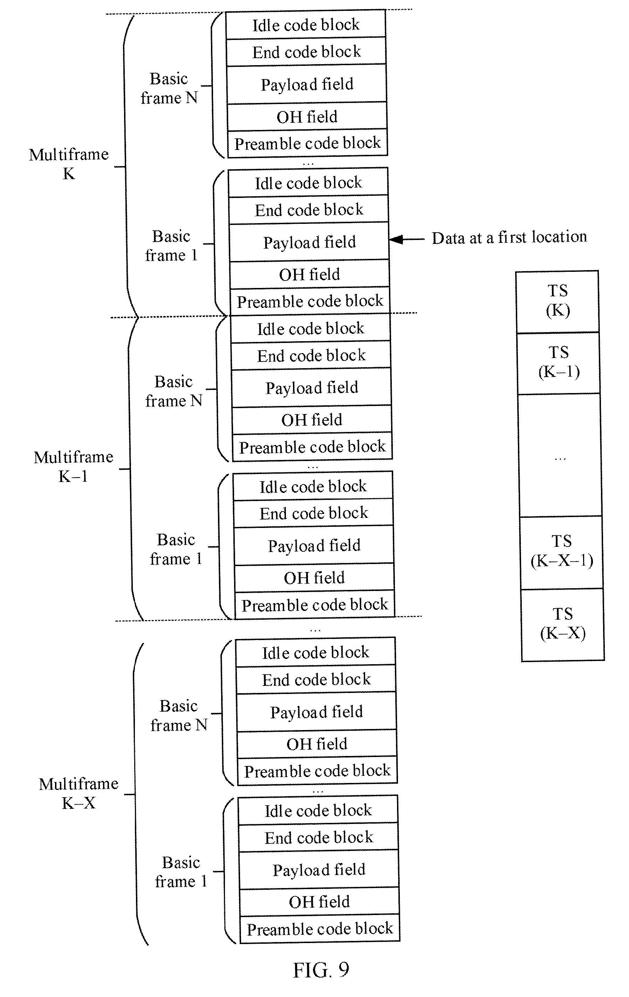

FIG. 9 is used as an example to describe a process of determining the real timestamp of the first multiframe. FIG. 9 is a diagram of a process of determining a real timestamp of a first multiframe according to an embodiment of this application. FIG. 9 shows a multiframe K-X to a multiframe K that are transmitted on a coarse-granularity channel based on a multiplexing period. Each multiframe includes a basic frame 1 to a basic frame N, the basic frame includes a preamble code block, an OH field, a payload field, an end code block, and an idle code block. FIG. 9 further shows a total of K+1 buffers from TS (K) to TS (K-X).

A channel forwarding layer shifts K+1 buffers left each time after encapsulating a new multiframe, and stores a timestamp of a multiframe received from a physical layer in TS (K). It is assumed that data at a first location in a packet is subsequently borne in a payload field of a basic frame 1 of the multiframe K (that is, borne in a fine-granularity slot channel), a first multiframe is the multiframe K, and a second multiframe is the multiframe K-X. A node determines a timestamp of the multiframe K-X as a real timestamp of the multiframe K, that is, determines a timestamp read from TS (K-X) as the real timestamp of the multiframe K.

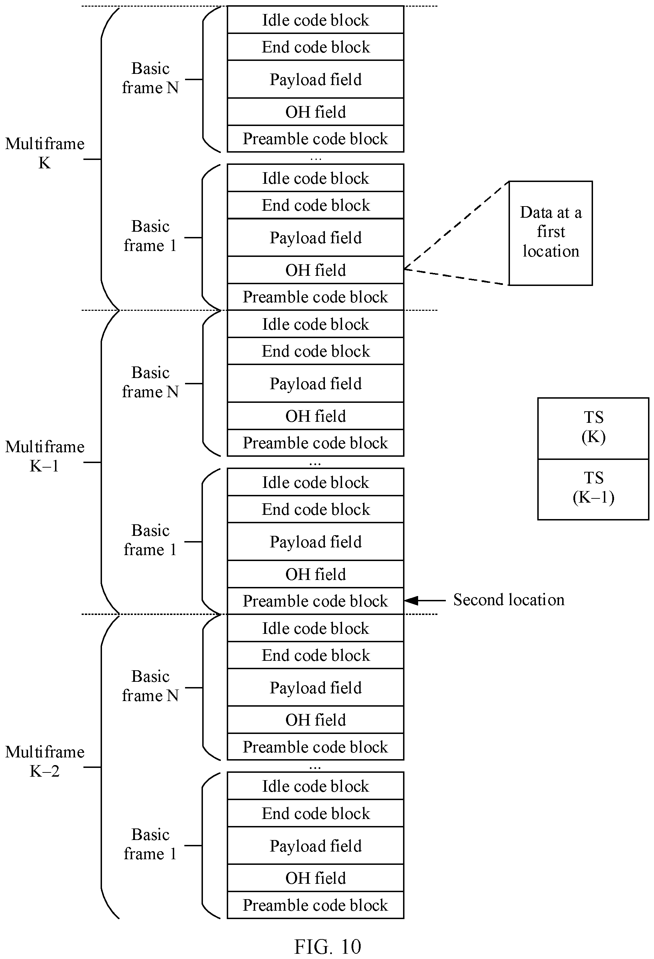

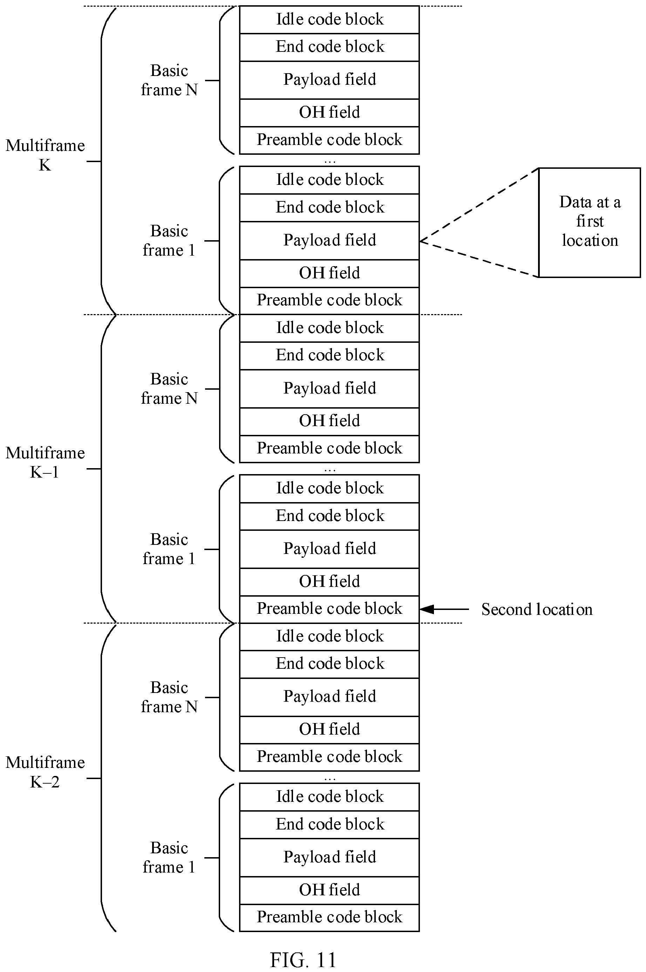

The following uses an example in which a first location of the packet is a 1^{st} bit of an SFD of the packet, a second location of the multiframe is a 1^{st} bit of an SFD of a 1^{st} basic frame of the multiframe, and X=1, to further describe a process of determining the real timestamp of the first multiframe by using FIG. 10 and FIG. 11.

The packet may be subsequently borne in a fine-granularity slot channel or a fine-granularity OH channel of the multiframe. FIG. 10 is a diagram of another process of determining a real timestamp of a first multiframe according to an embodiment of this application. FIG. 10 is described by using an example in which data at a first location in a packet is subsequently borne in a fine-granularity OH channel of the multiframe, that is, the fine-granularity OH channel of the multiframe includes a field of the data at the first location. FIG. 10 shows a multiframe K-2 to a multiframe K that are transmitted periodically on a coarse-granularity channel, a first location, and a second location. For a multiframe structure, refer to FIG. 9. Details are not described herein in embodiments of this application. The packet may be subsequently borne in an OH field. FIG. 10 further shows a total of two buffers from TS (K) to TS (K-1).

As shown in FIG. 10, the data at the first location is subsequently borne in an OH field of a basic frame 1 of the multiframe K. In this case, the first multiframe is the multiframe K, the second multiframe is the multiframe K-1, and the second location is located in a preamble code block of the basic frame 1 of the multiframe K-1. Anode determines a timestamp of the multiframe K-1 as a real timestamp of the multiframe K, that is, determines a timestamp read from TS (K-1) as the real timestamp of the multiframe K.

FIG. 11 is a diagram of still another process of determining a real timestamp of a first multiframe according to an embodiment of this application. FIG. 11 is described by using an example in which data at a first location in a packet is subsequently borne in a fine-granularity slot channel of a multiframe, that is, the fine-granularity slot channel of the multiframe includes a field of the data at the first location. FIG. 11 shows a multiframe K-X to a multiframe K that are transmitted periodically on a coarse-granularity channel, a first location, and a second location. For a multiframe structure, refer to FIG. 9. Details are not described herein in embodiments of this application. The packet may be subsequently borne in a payload field. A buffer is not shown in FIG. 11. For a buffer corresponding to FIG. 11, refer to FIG. 10.

As shown in FIG. 11, the data at the first location is subsequently borne in a payload field of a basic frame 1 of the multiframe K. In this case, a first multiframe is the multiframe K, a second multiframe is a multiframe K-1, and the second location is located in a preamble code block of a basic frame 1 of the multiframe K-1. A node determines a timestamp of the multiframe K-1 as a real timestamp of the multiframe K, that is, determines a timestamp read from TS (K-1) as the real timestamp of the multiframe K.

In conclusion, according to the packet processing method provided in embodiments of this application, when the data at the first location in the packet arrives at a channel forwarding layer, the first multiframe used to bear the data at the first location is determined, and then a timestamp of a second multiframe in a channel in which the first multiframe is located is obtained from a storage space, a real timestamp of the first multiframe is determined based on the obtained timestamp of the second multiframe. In this way, packet stamping is implemented in the Ethernet leased line technology. The second multiframe is an X^{th} multiframe previous to the first multiframe in the channel, and the timestamp of the second multiframe is the timestamp at which the second location of the second multiframe arrives at a physical layer, that is, the timestamp of the second multiframe is determined at the physical layer. Jitter of data transmission at the physical layer is low, and transmission stability is high. Therefore, determining the timestamp of the second multiframe at the physical layer may improve accuracy of the timestamp of the second multiframe, thereby ensuring accuracy of the real timestamp of the first multiframe. When the real timestamp of the first multiframe is used for time synchronization between nodes and is used to determine a round-trip delay of the packet between the nodes, accurate time synchronization may be implemented and an accurate round-trip delay may be determined.

The physical layer determines the timestamp of the multiframe when identifying the second location of the multiframe, and the channel forwarding layer reads the timestamp of the second multiframe when identifying the first location of the packet. The operation processes of the physical layer and the channel forwarding layer correspond to frame structures of the physical layer and the channel forwarding layer, and decoupling between the channel forwarding layer and the physical layer is implemented, so that packet stamping is implemented without changing an original data structure of each layer, and an implementation process is simple and easy to maintain.

In addition, definitions of the first location and the second location may be compatible with packet stamping reference locations defined in standards of the Institute of Electrical and Electronics Engineers (Institute of Electrical and Electronics Engineers, IEEE) and the Optical Internetworking Forum (Optical Internetworking Forum, OIF). This improves applicability of the method.

A sequence of the methods provided in embodiments of this application may be properly adjusted, or a process may be correspondingly added or deleted based on a situation. Any variation method readily figured out by a person skilled in the art within the technical scope disclosed in this application shall fall within the protection scope of this application. This is not limited in embodiments of this application.

The packet processing method provided in embodiments of this application is mainly described above from a perspective of a device. It may be understood that, to implement the foregoing functions, the device includes corresponding hardware structures and/or software modules for performing the functions. A person of ordinary skill in the art should easily be aware that, in combination with algorithms and steps in the examples described in embodiments disclosed in this specification, this application can be implemented by hardware or a combination of hardware and computer software. Whether a function is performed by hardware or computer software driving hardware depends on a specific application and a design constraint condition of the technical solution. A person skilled in the art may use different methods to implement the described functions for each particular application, but it should not be considered that the implementation goes beyond the scope of this application.

In embodiments of this application, functional modules of the device may be obtained through division based on the foregoing method examples. For example, each functional module may be obtained through division in correspondence to each function, or two or more functions may be integrated into one processing module. The integrated module may be implemented in a form of hardware, or may be implemented in a form of a software functional module. It should be noted that the module division in embodiments of this application is an example, and is merely logical function division. In actual implementation, there may be another division manner.

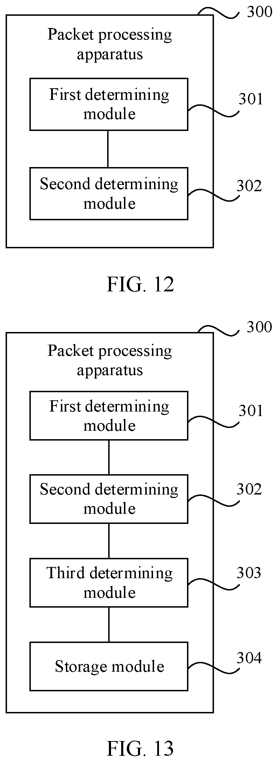

FIG. 12 is a block diagram of a packet processing apparatus according to an embodiment of this application. The packet processing apparatus 300 may be a node (including a sending node and a receiving node), or may be a chip in the node, or another combination component, component, or the like that has a function of the foregoing packet processing apparatus. When each functional module is obtained through division based on each corresponding function, the packet processing apparatus 300 may include:
a first determining module 301, configured to: when data at a first location in a packet arrives at a channel forwarding layer, determine a first multiframe used to bear the data at the first location; and
a second determining module 302, configured to: determine a real timestamp of the first multiframe based on a timestamp of a second multiframe in a channel in which the first multiframe is located, where the second multiframe is an X^{th} multiframe previous to the first multiframe in the channel, X≥0, and the timestamp of the second multiframe is a timestamp at which a second location of the second multiframe arrives at a physical layer.

With reference to the foregoing solution, the first location includes at least one of the following: a next bit of an SFD of the packet, a 1^{st} bit of the SFD of the packet, or a 1^{st} bit of a preamble code block of the packet.

With reference to the foregoing solution, the multiframe includes a plurality of basic frames arranged based on slots, and the second location includes at least one of the following: a next bit of an SFD of a 1^{st} basic frame of the multiframe, a 1^{st} bit of the SFD of the 1^{st} basic frame of the multiframe, or a 1^{st} bit of a preamble code block of the 1^{st} basic frame of the multiframe.

With reference to the foregoing solution, X>0, and the second determining module 302 is specifically configured to determine the real timestamp of the first multiframe based on the timestamp of the second multiframe and an interval between the second multiframe and the first multiframe.

With reference to the foregoing solution, the second determining module 302 is specifically configured to determine the timestamp of the second multiframe as the real timestamp of the first multiframe.

With reference to the foregoing solution, FIG. 13 is a block diagram of another packet processing apparatus according to an embodiment of this application. Based on FIG. 12, the apparatus further includes:
a third determining module 303, configured to determine a time at which the second location of the multiframe in the channel arrives at the physical layer as the timestamp of the multiframe; and
a storage module 304, configured to store the timestamp of the multiframe in a storage space; and
the second determining module 302 is specifically configured to:
   obtain the timestamp of the second multiframe from the storage space; and
   determine the real timestamp of the first multiframe based on the obtained timestamp of the second multiframe.

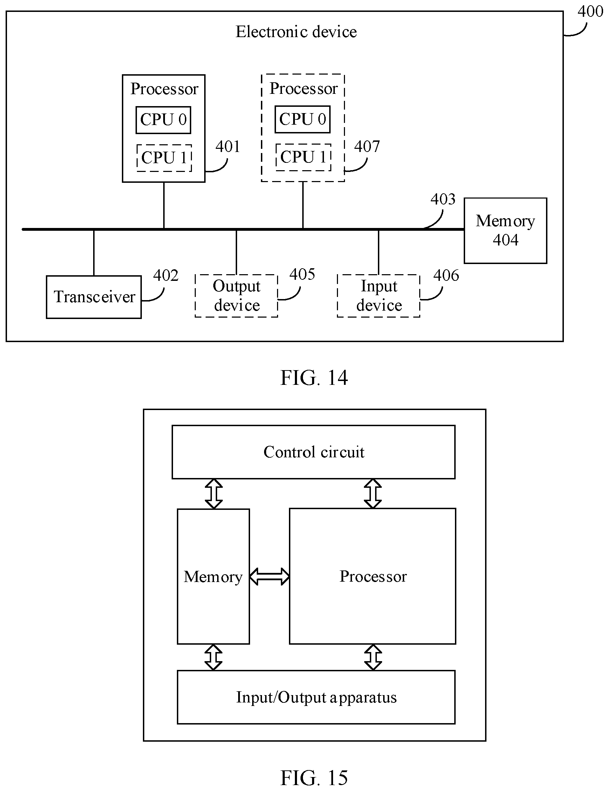

FIG. 14 is a diagram of a structure of an electronic device according to an embodiment of this application. The electronic device 400 may be a node or a chip or a functional module in a node. As shown in FIG. 14, the electronic device 400 includes a processor 401, a transceiver 402, and a communication line 403.

The processor 401 is configured to perform any step in the method embodiment shown in FIG. 7 or FIG. 8, and when performing a transmission process like sending a real timestamp, the processor 401 may choose to invoke the transceiver 402 and the communication line 403 to complete a corresponding operation.

Further, the electronic device 400 may include a memory 404. The processor 401, the memory 404, and the transceiver 402 may be connected through the communication line 403.

The processor 401 is a central processing unit (central processing unit, CPU), a general-purpose processor, a network processor (network processor, NP), a digital signal processor (digital signal process, DSP), a microprocessor, a microcontroller, a programmable logic device (programmable logic device, PLD), or any combination thereof. The processor 401 may alternatively be another apparatus having a processing function, for example, a circuit, a component, or a software module. This is not limited.

The transceiver 402 is configured to communicate with another device or another communication network. The another communication network may be Ethernet, a radio access network (radio access network, RAN), a wireless local area network (wireless local area network, WLAN), or the like. The transceiver 402 may be a module, a circuit, a transceiver, or any apparatus that can implement communication.

The transceiver 402 is mainly configured to receive and send data, and may include a transmitter and a receiver that respectively send and receive a signal. Operations other than signal receiving and sending are implemented by the processor, such as information processing and calculation.

The communication line 403 is configured to transmit information between components included in the electronic device 400.

In a design, the processor may be considered as a logic circuit, and the transceiver may be considered as an interface circuit.

The memory 404 is configured to store instructions. The instructions may be a computer program.

The memory 404 may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, a plurality of forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). The memory 404 may alternatively be a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium, another magnetic storage device, or the like. It should be noted that the memories of the systems and methods described in this specification include but are not limited to these and any memory of another proper type.

It should be noted that the memory 404 may exist independently of the processor 401, or may be integrated with the processor 401. The memory 404 may be configured to store instructions, program code, some data, or the like. The memory 404 may be located in the electronic device 400, or may be located outside the electronic device 400. This is not limited. The processor 401 is configured to execute the instructions stored in the memory 404, to implement the methods provided in the foregoing embodiments of this application.

In an example, the processor 401 may include one or more processors, for example, a CPU 0 and a CPU 1 in FIG. 14.

In an optional implementation, the electronic device 400 includes a plurality of processors. For example, in addition to the processor 401 in FIG. 14, the electronic device 400 may further include a processor 407.

In an optional implementation, the electronic device 400 further includes an output device 405 and an input device 406. For example, the input device 406 is a device like a keyboard, a mouse, a microphone, or a joystick, and the output device 405 is a device like a display or a speaker (speaker).

It should be noted that the electronic device 400 may be a chip system or a device having a structure similar to that in FIG. 14. The chip system may include a chip, or may include a chip and another discrete component. Mutual reference may be made to actions, terms, and the like in embodiments of this application. This is not limited. In embodiments of this application, a name of a message exchanged between devices, a name of a parameter in a message, or the like is merely an example. Another name may be used in a specific implementation. This is not limited. In addition, a composition structure shown in FIG. 14 does not constitute a limitation on the electronic device 400. In addition to the components shown in FIG. 14, the electronic device 400 may include more or fewer components than those shown in FIG. 14, or combine some components, or have different component arrangements.

The processor and the transceiver described in this application may be implemented in an integrated circuit (integrated circuit, IC), an analog IC, a radio frequency integrated circuit, a mixed signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an N-type metal oxide semiconductor (N-type Metal-oxide-semiconductor, NMOS), a positive channel metal oxide semiconductor (positive channel metal oxide semiconductor, PMOS), a bipolar junction transistor (bipolar junction transistor, BJT), a bipolar CMOS (BiCMOS), silicon germanium (SiGe), and gallium arsenide (GaAs).

FIG. 15 is a diagram of a structure of a packet processing apparatus according to an embodiment of this application. The packet processing apparatus may be used in the scenarios shown in the foregoing method embodiments. For ease of description, FIG. 15 shows only main components of the packet processing apparatus, including a processor, a memory, a control circuit, and an input/output apparatus. The processor is mainly configured to process a communication protocol and communication data, execute a software program, and process data of the software program. The memory is mainly configured to store the software program and data. The control circuit is mainly configured to supply power and transmit various electrical signals. The input/output apparatus is mainly configured to receive data input by a user and output data to the user.

When the packet processing apparatus is a node, the control circuit may be a main board, the memory includes a medium having a storage function, for example, a hard disk, a RAM, and a ROM, and the processor may include a baseband processor and a central processing unit. The baseband processor is mainly configured to process a communication protocol and communication data. The central processing unit is mainly configured to control the entire packet processing apparatus, execute the software program, and process data of the software program. The input/output apparatus includes a display, a keyboard, a mouse, and the like. The control circuit may further include or be connected to a transceiver circuit or a transceiver, for example, a network cable interface, configured to send or receive data or a signal, for example, perform data transmission and communication with another device. Further, the control circuit may further include an antenna, configured to receive and send a radio signal, and configured to perform data/signal transmission with another device.

According to the method provided in embodiments of this application, this application further provides a computer program product, where the computer program product includes computer program code, and when the computer program code is run on a computer, the computer performs the method according to any one of embodiments of this application.

An embodiment of this application further provides a computer-readable storage medium. All or some of the procedures in the foregoing method embodiments may be implemented by a computer or an apparatus having an information processing capability by executing a computer program or instructions, to control related hardware. The computer program or the group of instructions may be stored in the foregoing computer-readable storage medium. When the computer program or the group of instructions are executed, the procedures of the foregoing method embodiments may be performed. The computer-readable storage medium may be an internal storage unit of a node according to any one of the foregoing embodiments, for example, a hard disk or a memory of the node. The computer-readable storage medium may also be an external storage device of the node, for example, a plug-in hard disk, a smart media card (smart media card, SMC), a secure digital (secure digital, SD) card, or a flash card (flash card) that are configured on the node. Further, the computer-readable storage medium may include both the internal storage unit and the external storage device of the node. The computer-readable storage medium is configured to store the computer program or the instructions and another program and data required by the node. The computer-readable storage medium may be further configured to temporarily store data that has been output or is to be output.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for detailed working processes of the foregoing systems, apparatuses, and units, refer to corresponding processes in the foregoing method embodiments. Details are not described herein again.

In the several embodiments provided in this application, it should be understood that the disclosed systems, apparatuses, and methods may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (a personal computer, a server, or a network device) to perform all or some of the steps of the methods described in embodiments of this application. The foregoing storage medium includes any medium that can store program code, like a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A packet processing method, wherein the method comprises:
when data at a first location in a packet arrives at a channel forwarding layer, determining a first multiframe used to bear the data at the first location; and
determining a real timestamp of the first multiframe based on a timestamp of a second multiframe in a channel in which the first multiframe is located, wherein the second multiframe is an X^{th} multiframe previous to the first multiframe in the channel, X≥0, and the timestamp of the second multiframe is a timestamp at which a second location of the second multiframe arrives at a physical layer.

2. The method according to claim 1, wherein the first location comprises at least one of the following: a next bit of a start-of-frame delimiter SFD of the packet, a 1^{st} bit of the SFD of the packet, or a 1^{st} bit of a preamble code block of the packet.

3. The method according to claim 1 or 2, wherein the multiframe comprises a plurality of basic frames arranged based on slots, and the second location comprises at least one of the following: a next bit of a start-of-frame delimiter SFD of a 1^{st} basic frame of the multiframe, a 1^{st} bit of the SFD of the 1^{st} basic frame of the multiframe, or a 1^{st} bit of a preamble code block of the 1^{st} basic frame of the multiframe.

4. The method according to any one of claims 1 to 3, wherein X>0, and the determining a real timestamp of the first multiframe based on a timestamp of a second multiframe in a channel in which the first multiframe is located comprises:
determining the real timestamp of the first multiframe based on the timestamp of the second multiframe and an interval between the second multiframe and the first multiframe.

5. The method according to any one of claims 1 to 3, wherein the determining a real timestamp of the first multiframe based on a timestamp of a second multiframe in a channel in which the first multiframe is located comprises:
determining the timestamp of the second multiframe as the real timestamp of the first multiframe.

6. The method according to any one of claims 1 to 5, wherein the method further comprises:
determining a time at which the second location of the multiframe in the channel arrives at the physical layer as the timestamp of the multiframe; and
storing the timestamp of the multiframe in a storage space; and
the determining a real timestamp of the first multiframe based on a timestamp of a second multiframe in a channel in which the first multiframe is located comprises:
obtaining the timestamp of the second multiframe from the storage space; and
determining the real timestamp of the first multiframe based on the obtained timestamp of the second multiframe.

7. A packet processing apparatus, wherein the apparatus comprises:
a first determining module, configured to: when data at a first location in a packet arrives at a channel forwarding layer, determine a first multiframe used to bear the data at the first location; and
a second determining module, configured to determine a real timestamp of the first multiframe based on a timestamp of a second multiframe in a channel in which the first multiframe is located, wherein the second multiframe is an X^{th} multiframe previous to the first multiframe in the channel, X≥0, and the timestamp of the second multiframe is a timestamp at which a second location of the second multiframe arrives at a physical layer.

8. The apparatus according to claim 7, wherein the first location comprises at least one of the following: a next bit of a start-of-frame delimiter SFD of the packet, a 1^{st} bit of the SFD of the packet, or a 1^{st} bit of a preamble code block of the packet.

9. The apparatus according to claim 7 or 8, wherein the multiframe comprises a plurality of basic frames arranged based on slots, and the second location comprises at least one of the following: a next bit of a start-of-frame delimiter SFD of a 1^{st} basic frame of the multiframe, a 1^{st} bit of the SFD of the 1^{st} basic frame of the multiframe, or a 1^{st} bit of a preamble code block of the 1^{st} basic frame of the multiframe.

10. The apparatus according to any one of claims 7 to 9, wherein X>0, and the second determining module is specifically configured to:
determine the real timestamp of the first multiframe based on the timestamp of the second multiframe and an interval between the second multiframe and the first multiframe.

11. The apparatus according to any one of claims 7 to 9, wherein the second determining module is specifically configured to:
determine the timestamp of the second multiframe as the real timestamp of the first multiframe.

12. The apparatus according to any one of claims 7 to 11, wherein the apparatus further comprises:
a third determining module, configured to determine a time at which the second location of the multiframe in the channel arrives at the physical layer as the timestamp of the multiframe; and
a storage module, configured to store the timestamp of the multiframe in a storage space; and
the second determining module is specifically configured to:
obtain the timestamp of the second multiframe from the storage space; and
determine the real timestamp of the first multiframe based on the obtained timestamp of the second multiframe.

13. A packet processing apparatus, wherein the apparatus comprises:
one or more processors; and
a memory, configured to store one or more computer programs or instructions, wherein
when the one or more computer programs or instructions are executed by the one or more processors, the one or more processors are enabled to implement the method according to any one of claims 1 to 6.

14. A computer-readable storage medium, comprising a computer program or instructions, wherein when the computer program or the instructions is/are executed on a computer, the computer is enabled to perform the method according to any one of claims 1 to 6.
